# EUROPÄISCHE PATENTSCHRIFT

(11) **EP 1 867 956 B1**
(45) Veröffentlichungstag und Bekanntmachung des Hinweises auf die Patenterteilung: **06.04.2011**
(21) Anmeldenummer: 07010786.7
(22) Anmeldetag: 31.05.2007
(51) Int. Cl.: G01D 5/14

(54) **Vergrösserung des Wirkabstandes bei magnetischen Sensoren mittels eines Stützfeldes**
Enlargement of the effective range of magnetic sensors using a support field
Agrandissement de la distance active pour capteurs magnétiques à l'aide d'un champ de support

(30) Priorität: 03.06.2006 DE 102006026110
(43) Veröffentlichungstag der Anmeldung: 19.12.2007
(73) Patentinhaber: Hirschmann Automotive GmbH, 6830 Rankweil-Brederis (AT)
(72) Erfinder: Mähr, Dietmar, 6800 Feldkirch (AT); Dengler, Werner, 6714 Nüziders (AT)
(74) Vertreter: Thul, Hermann

(56) Entgegenhaltungen:
- DE-A1- 4 440 214
- DE-A1-102004 011 728
- US-A1- 2003 020 468

## Beschreibung

Die Erfindung betrifft eine Sensoranordnung, die auf dem magnetosensitiven Prinzip basiert, gemäß den Merkmalen des Oberbegriffes des Patentanspruches 1.

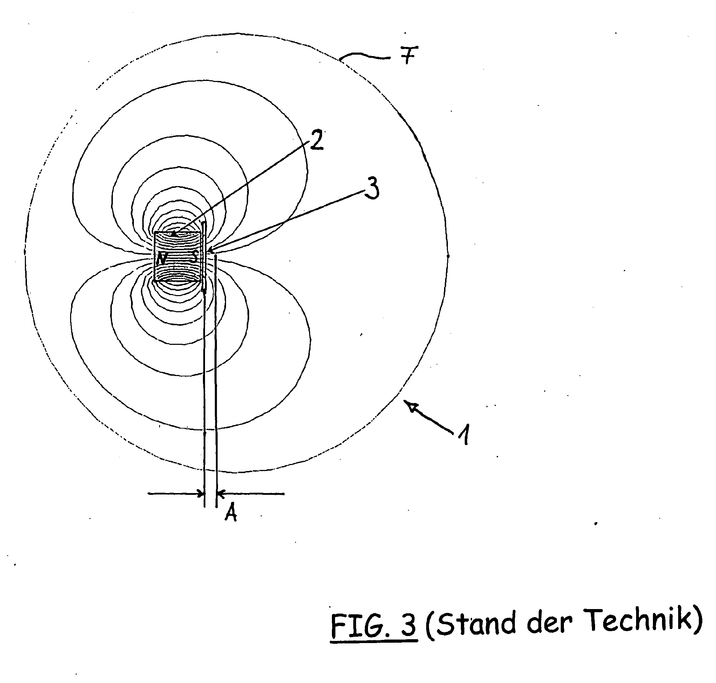

Eine grundsätzlich bekannte Sensoranordnung, die auf dem magnetosensitiven Prinzip basiert, ist in der Figur 3 exemplarisch gezeigt und im Folgenden beschrieben. Diese Sensoranordnung 1 weist einen Sensormagneten 2 und einen zugehörigen magnetosensitiven Sensor 3 (beispielsweise eine Hallsensor) auf, wobei von dem Serlsormagneten 2 ausgehend vom Nordpol N in Richtung des Südpoles S Feldlinien F wandern. Zur Realisierung der Funktion dieser Sensoranordnung 1 ist es erforderlich, dass das hier nicht dargesteifte Messobjekt in der Nähe des Sensormagneten 2 bzw. des magnetosensitiven Sensors 3 vorbeigeführt werden muss. Daraus ergibt sich ein eingeschränkter Funktionsbereich der Sensoranordnung 3 bezüglich des Wirkabstandes, der typischerweise kleiner 5 mm beträgt. Dies liegt daran, dass in Abhängigkeit der räumlichen Ausdehnung des Sensormagneten 2 und die daraus resultierenden Verläufe der Feldlinien F eine starke Streuung dieser Magnetfeldlinien F gegeben ist. D. h., dass bei größeren als den genannten Abständen zwischen den Sensormagneten 2 und dem Messobjekt nur noch eine geringe magnetische Flussdichte im Bereich der Oberfläche des aus einem magnetischen Werkstoff bestehenden Messobjektes herrscht und dementsprechend resultieren nur noch geringe Feldänderungen aus einer Bewegung des Messobjektes, die von dem magnetosensitiven Sensor 3 gar nicht mehr oder nur unzureichend erfasst werden. Das wiederum bedeutet, dass die Empfindlichkeit (Sensitivität) der Sensoranordnung 1, insbesondere des magnetosensitiven Sensors 3, nicht mehr ausreicht, um diese minimalen Feldänderungen in größeren Wirkabständen (insbesondere größere Abstände als 5 mm) zu erkennen.

Aus der DE 10 2004 011 728 A1 ist ein Tastkopf für ein Koordinatenmessgerät bekannt, wobei der Tastkopf eine Sensoranordnung zum Erfassen von Auslenkungen eines Taststiftes besitzt. Die Sensoranordnung ist aufgeteilt in zwei Erfassungseinrichtungen für die Auslenkungen des Taststiftes, wobei die erste Erfassungseinrichtung ein erstes Hallelement mit zwei zugehörigen Magneten sowie die zweite Erfassungseinrichtung ein zweites Hallelement mit zwei weiteren zugehörigen Magneten umfasst. Der erste und der zweite Magnet sind gegenüberliegend zueinander mit einer Lücke angeordnet, wobei das erste Hallelement derart angeordnet ist, dass es sich bei einer Auslenkung des Taststiftes relativ zu dem ersten und zweiten Magneten In der Lücke bewegt. Weiterhin sind ein dritter und ein vierter Magnet ebenfalls gegenüberliegend zueinander mit einer Lücke angeordnet, wobei das zweite Hallelement derart angeordnet ist, dass es sich ebenfalls bei einer Auslenkung des Taststiftes relativ zu dem dritten und vierten Magneten In der Lücke bewegt.

Zur Erhöhung der Empfindlichkeit einer solchen Sensoranordnung könnte daran gedacht werden, den Sensormagneten 2 hinsichtlich seiner magnetischen und/oder seiner räumlichen Eigenschaften zu vergrößern, um auch bei größeren Abständen von dem Sensormagneten 2 eine stärkere Ausbildung von Feldlinien zu erzeugen. Dies hat aber den Nachteil, dass bei einer räumlichen Vergrößerung des Sensormagneten oftmals dieser Raum nicht gegeben ist, sodass dieser Weg zur Verbesserung versperrt ist. Sollen bei gleicher Baugröße stärkere Feldlinien erzielt werden, ist es erforderlich, spezielle magnetische Materialien für den Sensormagneten zu verwenden, die allerdings den Nachteil aufweisen, dass sie entweder kostenintensiv sind und/oder problematisch bei der Herstellung sorcher Sensoranordnungen sind.

Der Erfindung liegt daher die Aufgabe zugrunde, eine Sensoranordnung bereit zu stellen, bei der der Funktionsbereich der Sensoranordnung bezüglich des Wirkabstandes verbessert ist, d. h., dass es ermöglicht werden soll, dass ein Messobjekt auch in größeren als bisher bekannten Abständen zu dem Sensormagneten bzw. dem magnetosensitiven Sensor vorbeigeführt werden können.

Diese Aufgabe ist durch die Merkmale des Patentanspruches 1 gelöst.

Erfindungsgemäß ist vorgesehen, dass ein weiterer Magnet (auch Stützmagnet genannt) beabstandet zu dem Sensormagneten angeordnet ist, wobei das Messobjekt zwischen den beiden Magneten bewegbar angeordnet ist. Der Stützmagnet hat den Effekt, dass die Feldlinien zwischen den beiden Magneten stärker in eine vorgegebene (gewünschte) Richtung (Vorzugsrichtung) gebündelt werden. Dadurch ist es möglich, dass das Messobjekt in einem größeren als bisher bekannten Abstand zu dem Sensormagneten angeordnet und bewegt werden kann, da jetzt bei dem größeren Abstand zwischen dem Sensormagneten bzw. dem magnetosensitiven Sensor und dem Messobjekt eine ausreichend hohe magnetische Flussdichte im Bereich der Oberfläche des Messobjektes herrscht, aus der die zur Erfassung der Bewegung des Messobjektes erforderliche hohe Feldänderung bei einer Bewegung des Messobjektes resultiert. Durch die Anordnung dieses Stützmagneten, der beabstandet zu dem Sensormagneten angeordnet ist, wird somit in vorteilhafter Weise die Empfindlichkeit der Sensoranordnung erhöht, da die Magnetfeldlinien zwischen den jeweiligen Polen der Magnete in die Vorzugsrichtung ausgerichtet (gebündelt) sind und es somit nicht mehr zu der nachteiligen starken Streuung der Magnetfeldlinien kommt.

In Weiterbildung der Erfindung ist das Messobjekt in einem größeren Abstand zu dem Sensormagneten angeordnet, als der Abstand zu dem Stützmagneten beträgt. Das bedeutet mit anderen Worten, dass der Abstand zwischen dem Messobjekt und dem Sensormagneten größer ist als der Abstand zwischen dem Messobjekt und dem Stützmagneten. Dadurch sind größere Freiheiten bei der Anordnung der Magnete und dem Raum zwischen den Magneten, in dem das Messobjekt bewegt wird, gegeben. Außerdem spielen bei einer kompakt bauenden Sensoranordnung die Toleranzen keine so große Rolle mehr, da größere Abstände als bisher möglich sind. Vorzugsweise beträgt der Abstand zwischen dem Sensormagneten und der Oberfläche des Messobjektes bis zu 20 mm, woraus der Effekt ersichtlich ist, dass der erfindungsgemäß angeordnete Stützmagnet zu einer deutlichen Vergrößerung des Wirkungsbereiches der Sensoranordnung führt.

In Weiterbildung der Erfindung ist die Sensoranordnung zur Erfassung von rotatorischen oder linearen Bewegungen des Messobjektes ausgebildet. Durch den Einsatz des erfindungsgemäßen Stützmagneten wird somit eine Sensoranordnung zur Erfassung von rotatorischen oder linearen Bewegungen zur Verfügung gestellt, die gegenüber bekannten Sensoranordnungen einen erweiterten Funktionsbereich aufweist.

In Weiterbildung der Erfindung sind der Sensormagnet und/oder der Stützmagnet als Dauermagnet oder Elektromagnet ausgebildet. Damit bestehen Freiheiten bei dem Aufbau der Sensoranordnung, sodass mit den genannten Arten von Magneten die gewünschten Effekte erzielbar sind. Der Dauermagnet hat hierbei den Vorteil, dass er magnetische Feldlinien erzeugt, ohne dass es einer zusätzlichen Stromversorgung bedarf. Der Elektromagnet hat dabei den Vorteil, dass seine magnetische Feldstärke und die daraus resultierenden magnetischen Feldlinien aufgrund seiner Stromversorgung sehr genau und präzise eingestellt werden können.

In einer weiteren Ausgestaltung der Erfindung bestehen der Sensormagnet und/oder der Stotzmagnet aus einem magnetisierbaren Kunststoff. Dies hat den Vorteil, dass diese Magnete genau in die gewünschte Form gebracht werden können, für die der Bauraum zur Verfügung steht. Das bedeutet, dass die Magnete jede beliebige Form aufweisen können und den geometrischen Verhältnissen am oder im Bauraum angepasst werden können. Außerdem besteht die Möglichkeit, dass ein Magnet aus einem magnetisierbaren Kunststoff schon mit Herstellung der Sensoranordnung hergestellt werden kann.

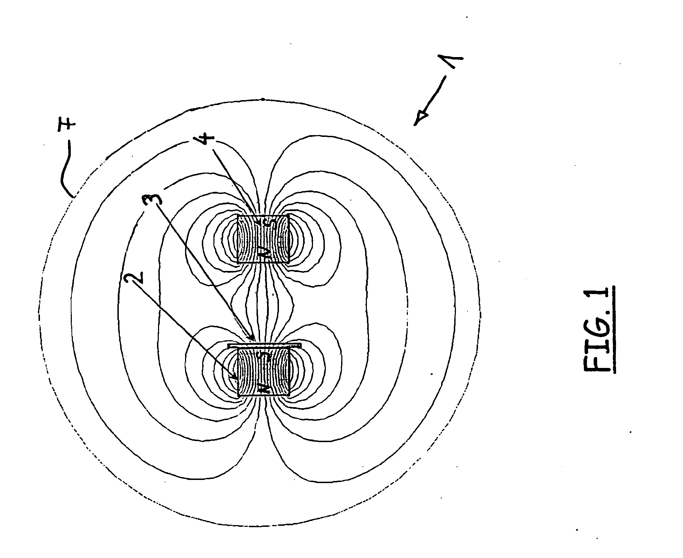

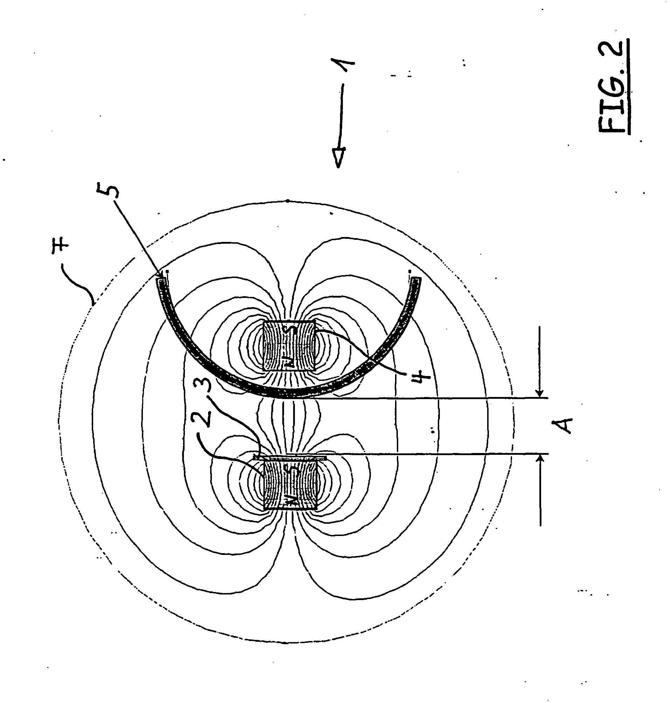

Ausführungsbeispiele einer erfindungsgemäßen Sensoranordnung, sind in den Figuren 1 und 2 dargestellt.

In den beiden Figuren ist, soweit im Einzelnen dargestellt, eine Sensoranordnung mit 1 bezeichnet, die einen Sensormagneten 2 sowie einen zugehörigen magnetosensitiven Sensor 3, beispielsweise ein Hallsensor, aufweist. In erfindungsgemäßer Weise ist dem Sensormagneten 2 ein weiterer Magnet 4, hier Stützmagnet genannt, zugeordnet, wobei der weitere Magnet 4 zu den Effekt führt, dass die magnetischen Feldlinien F viel stärker in die gewünschte Richtung (Vorzugsrichtung) gebündelt werden. Die Vorzugsrichtung ist bei diesem Ausführungsbeispiel zwischen dem Südpol S des Sensormagneten 2 und dem Nordpol N des weiteren Magnetes 4 zu sehen. Andere Ausrichtungen sind denkbar. Während in Figur 1 das zwischen den beiden Magneten 2, 4 bewegbare Messobjekt nicht dargestellt ist, ist in Figur 2 eine Ausgestaltung der Sensoranordnung 1 für die Anwendung als Drehzahlsensor dargestellt. Hier ist das Messobjekt (Taget) mit der Bezugsziffer 5 versehen, wobei weiterhin deutlich wird, dass das Messobjekt 5 in einem größeren Abstand A zu dem Sensormagneten 2 angeordnet ist, als der Abstand zu dem Magneten 4 beträgt. Betrug der Wirkabstand bei einer Sensoranordnung 1 gemäß dem Stand der Technik (siehe Figur 3) lediglich maximal 5 mm, so ist jetzt mit dem erfindungsgemäßen Magneten 4 ein Abstand von bis zu 20 mm möglich. Die Form des Messobjektes 5, wie es in Figur 2 dargestellt ist, ist lediglich beispielhaft und kann den jeweiligen Gegebenheiten angepasst werden. So kann das Messobjekt 5 beispielsweise gerade ausgeführt sein, wenn die Sensoranordnung 1 zur Erfassung linearer Bewegungen ausgebildet ist und angewendet wird.

Grundsätzlich ist der Sensormagnet 2 mit seinem zugeordnetem magnetosensitiven Sensor 3 (Sensorelement, ggf. mit einem zusätzlichen Feldkonzentrator, beispielsweise in Form eines Flussleitbleches) feststehend angeordnet, während das Messobjekt 5 relativ dazu bewegbar ist. Außerdem ist der Stützmagnet 4 ebenfalls feststehend angeordnet. Hierbei kann es denkbar sein, dass das Messobjekt 5 und der Stützmagnet 4 eine Baueinheit bilden, die so ausgebildet ist, dass sie in der erforderlichen Distanz zu dem Sensormagneten 2 angeordnet ist, wobei in dieser Baueinheit der Stützmagnet 4 fest steht (auch damit relativ zu dem Sensormagneten 2 fest steht), während das Messobjekt 5 innerhalb dieser Baueinheit bewegbar (linear oder rotatorisch) ist.

### Bezugszeichenliste

- 1.: Sensoranordnung
- 2.: Sensormagnet
- 3.: magnetosensitiver Sensor
- 4.: Stützmagnet
- 5.: Meßobjekt

- A: Abstand
- F: Feldlinien
- N: Nordpol
- S: Südpol

## Patentansprüche

1. Sensoranordnung (1), die einen Sensormagneten (2) sowie einen damit zusammenwirkenden magnetosensitiven Sensor (3) aufweist, wobei weiterhin ein Meßobjekt (5) benachbart und bewegbar zu dem magnetosensitiven Sensor (3) angeordnet ist, **dadurch gekennzeichnet, dass** ein weiterer Magnet (4) beabstandet zu dem Sensormagneten (2) angeordnet ist, wobei das Meßobjekt (5) zwischen den beiden Magneten (2, 4) bewegbar angeordnet ist.

2. Sensoranordnung (1) nach Anspruch 1, **dadurch gekennzeichnet, dass** das Meßobjekt (5) in einem größeren Abstand (A) zu dem Sensormagneten (2) angeordnet ist, als der Abstand zu dem Magnet (4) beträgt.

3. Sensoranordnung (1) nach Anspruch 1 oder 2, **dadurch gekennzeichnet, dass** die Sensoranordnung (1) zur Erfassung von rotatorischen oder linearen Bewegungen des Meßobjektes (5) ausgebildt ist.

4. Sensoranordnung (1) nach Anspruch 1, 2 oder 3, **dadurch gekennzeichnet, dass** der Sensormagnet (2) und/oder der Magnet (4) als Dauermagnet oder als Elektromagnet ausgebildet ist.

5. Sensoranordnung (1) nach Anspruch 1, 2 oder 3, **dadurch gekennzeichnet, dass** der Sensormagnet (2) und/oder der Magnet (4) aus einem magnetisierbaren Kunststoff besteht.

6. Sensoranordnung (1) nach einem der vorhergehenden Ansprüche, **dadurch gekennzeichnet, dass** der Abstand (A) größer 5 mm und kleiner gleich 20 mm beträgt.

## Claims

1. Sensor arrangement (1) having a sensor magnet (2) and a magnetosensitive sensor (3) which interacts with the latter, a measurement object (5) also being arranged adjacent to the magnetosensitive sensor (3) in such a manner that it can be moved with respect to the latter, **characterized in that** a further magnet (4) is arranged at a distance from the sensor magnet (2), the measurement object (5) being movably arranged between the two magnets (2, 4).

2. Sensor arrangement (1) according to Claim 1, **characterized in that** the measurement object (5) is arranged at a greater distance (A) from the sensor magnet (2) than the distance from the magnet (4).

3. Sensor arrangement (1) according to Claim 1 or 2, **characterized in that** the sensor arrangement (1) is designed to detect rotational or linear movements of the measurement object (5).

4. Sensor arrangement (1) according to Claim 1, 2 or 3, **characterized in that** the sensor magnet (2) and/or the magnet (4) is/are in the form of a permanent magnet or an electromagnet.

5. Sensor arrangement (1) according to Claim 1, 2 or 3, **characterized in that** the sensor magnet (2) and/or the magnet (4) consist(s) of a magnetizable plastic.

6. Sensor arrangement (1) according to one of the preceding claims, **characterized in that** the distance (A) is greater than 5 mm and is less than or equal to 20 mm.

## Revendications

1. Dispositif capteur (1) comportant un aimant capteur (2) ainsi qu'un capteur magnéto sensible (3) agissant en synergie, dans lequel un objet à mesurer (5) est de plus disposé au voisinage et mobile par rapport au capteur magnéto sensible (3), **caractérisé en ce qu'**un aimant supplémentaire (4) est disposé à une certaine distance de l'aimant capteur (2), l'objet à mesurer (5) étant disposé de manière mobile entre les deux aimants (2, 4).

2. Dispositif capteur (1) selon la revendication 1, **caractérisé en ce que** l'objet à mesurer (5) est disposé à une distance (A) de l'aimant capteur (2) plus grande que la distance de l'aimant (4).

3. Dispositif capteur (1) selon la revendication 1 ou 2, **caractérisé en ce que** le dispositif capteur (1) est développé pour l'enregistrement de mouvements de rotation ou linéaires de l'objet à mesurer (5).

4. Dispositif capteur (1) selon la revendication 1, 2 ou 3, **caractérisé en ce que** l'aimant capteur (2) et/ou l'aimant (4) est développé sous forme d'aimant permanent ou d'électroaimant.

5. Dispositif capteur (1) selon la revendication 1, 2 ou 3, **caractérisé en ce que** l'aimant capteur (2) et/ou l'aimant (4) est constitué de matière plastique magnétisable.

6. Dispositif capteur (1) selon une des revendications précédentes, **caractérisé en ce que** la distance (A) est supérieure à 5 mm et inférieure ou égale à 20 mm.
